**Europäisches Patentamt**

**European Patent Office**

**Office européen des brevets**

(11) Veröffentlichungsnummer : **0 442 383 B1**

(12) **EUROPÄISCHE PATENTSCHRIFT**

(45) Veröffentlichungstag der Patentschrift :
**15.09.93 Patentblatt 93/37**

(51) Int. Cl.⁵ : **A01J 5/04**

(21) Anmeldenummer : **91101708.5**

(22) Anmeldetag : **07.02.91**

(54) Verfahren und Vorrichtung zur permanenten Funktionsdiagnose einschliesslich der Regelung des Systemvakuums von Melkanlagen.

(30) Priorität : **12.02.90 DD 337768**

(43) Veröffentlichungstag der Anmeldung :
**21.08.91 Patentblatt 91/34**

(45) Bekanntmachung des Hinweises auf die
Patenterteilung :
**15.09.93 Patentblatt 93/37**

(84) Benannte Vertragsstaaten :
**BE DE DK FR NL**

(56) Entgegenhaltungen :
**DD-A- 232 373**
**DD-A- 260 351**
**US-A- 4 616 215**
**LANDTECHNIK. Bd. 35, Nr. 11, 1. November**
**1980, HANNOVER DE Seiten 518 - 521; D.**
**ORDOLFF: 'Melktechnik auf der DLG-Ausstel-**
**lung 1980 '**

(73) Patentinhaber : **Stirl, Armin, Dr. Ing.**
**Buchenweg 31**
**D-18292 Krakow am See (DE)**
Patentinhaber : **Kremp, Rosemarie, Dipl.-Ing.**
**Güstrower Strasse 9**
**D-18292 Charlottenthal (DE)**

(72) Erfinder : **Stirl,Armin,Dr.**
**Buchenweg 31**
**O-2602 Krakow (DE)**
Erfinder : **Kremp,Rosemarie,Dr.**
**Am Park 1**
**O-2601 Charlottenthal (DE)**
Erfinder : **Schwab,Reinald**
**Plauel Chaussee 11**
**O-2600 Krakow am See (DE)**
Erfinder : **Zenker,Günter**
**Langenstrasse 27**
**O-2601 Charlottenthal (DE)**

(74) Vertreter : **DIEHL GLAESER HILTL & PARTNER**
**Patentanwälte Königstrasse 28**
**D-22767 Hamburg (DE)**

EP 0 442 383 B1

## Beschreibung

Verfahren und Vorrichtung zur permanenten Funktionsdiagnose einschließlich der Regelung des Systemvakuums von Melkanlagen.

Melkanlagen dienen dem Milchentzug. Funktionsstörungen in den Melkanlagen wirken sich unmittelbar auf das Tier aus. Dadurch werden Tiergesundheit, Milchertrag und -qualität wesentlich beeinlußt. Deshalb ist es erforderlich, die Funktionsparameter der Melkanlagen ständig zu überwachen und bei Abweichungen über den Toleranzbereich hinaus zu regeln bzw. zu korrigieren. Zentrale Bedeutung kommt dabei insbesondere der Überwachung des Systemvakuums, bzw. seiner Stabilität zu.

Bekannte Verfahren und Vorrichtungen zur Diagnose von Melkanlagen (z.B. DD-PS 260 351 A 1), einschließlich des Systemvakuums, basieren auf Geräten, die periodisch an die Melkanlage angeschlossen werden können und ein Meßergebnis für einen begrenzten Zeitraum liefern. Eine punktuelle Nutzung dieses Meßergebnisses für Regelungszwecke ist nicht möglich. Im Stand der Technik sind Verfahren und Vorrichtungen zur Erfassung und Regelung des Systemvakuums bekannt, die auf der permanenten Bestimmung der Vakuumhöhe an einer bestimmten Stelle des Systems, die sich nahe der Regeleinrichtung befindet, beruhen. Ändert sich das Vakuum an dieser Stelle, so regelt die Vorrichtung das Vakuum auf die vorgegebene Höhe ein (z.B. DD-PS 232 373 A 1). Nachteilig an diesem bekannten Verfahren ist, daß der Wert des Vakuums an dieser Meßstelle als alleiniger Regelparameter das Systemvakuum ungenügend charakterisiert und folglich das System träge und instabil wird. Der Volumenstrom als entscheidender Parameter für die Stabilität des Systemvakuums und damit für die Funktionssicherheit der Melkanlage bleibt unberücksichtigt. Dadurch ist ein Absinken des Systemvakuums nur bis zu einem bestimmten Wert ausregelbar. Ein Überschreiten des unteren Grenzwertes kann zum Ausfall der Melkanlage führen. Eine Überdimensionierung der Vakuumerzeugeranlage reduziert die Wahrscheinlichkeit für die Überschreitung des Minimalwertes, wobei im gleichen Maße die Regelungenauigkeit zunimmt und die Wahrscheinlichkeit für die Überschreitung des oberen Grenzwertes steigt. Erhöhter Energieverbrauch sowie beeinträchtigte Milchentzugsbedingungen sind die Folge. Die bekannten Verfahren und Vorrichtungen bedingen eine große Instabilität des Systemvakuums im Vergleich zu den geforderten Normparametern und eine technologisch ungerechtfertigt hohe Volumenstromreserve.

Aufgabe der Erfindung ist daher die Bereitstellung einer permanenten Funktionsdiagnose mit gleichzeitiger Regelung des Systemvakuums durch laufende Erfassung ausgewählter Funktionsparameter.

Erfindungsgemäß wird die Aufgabe in einem Verfahren dadurch gelöst, daß die Funktionsparameter direkt aus den Signalen der Sensoren für die Druck-, Temperatur- und Volumenstrommessung gewonnen werden, wobei für die unmittelbare Erfassung des Parameters Volumenstromreserve ein Sensor mit digitalem oder analogem Meßsignal Verwendung findet, so daß eine direkte Zweikreis-Regelung des Funktionsparameters Volumenstromreserve des Systems über die wahlweise Ab- und Zuschaltung von Vakuumerzeugern und die druckabhängige Betriebsweise des Regelventils realisiert wird. Dafür wird der Druck nahe den Euterzitzen, an einer durch Vakuuminstabilität charakterisierten Stelle, aus dem Milchleitungssystem entnommen. Damit können ohne weiteres auch in kurzer Zeit und in kurzen Zeitabständen große Abweichungen des Drucks und des davon abhängigen Volumenstromverbrauches erfaßt, ausgewertet, angezeigt und ausgeglichen werden. Aus der gemessenen Volumenstromreserve und der vorgegebenen an den Melkanlagentyp gebundenen theoretischen Volumenstromverbrauchsmenge wird funktional der Normzustand für den direkten Funktionsbereich des Regelventils mit

$$K_{min} < B < K_{max}$$

$[K_{max}$     - anlagenspezifische Maximalkonstante]
$[K_{min}$     - anlagenspezifische Minimalkonstante]
$[B$     - Arbeitsbereich des Regelventils]
vorgegeben.

Das Optimum wird dabei vorzugsweise von der funktionalen Beziehung

$$B = (V_{LR}) : (V_{LV}) = 0,8 \text{ bis } 1,2$$

$[V_{LR}$ -     anlagenspezifisch erforderliche Volumenstromreserve]
$[V_{LV}$ -     theoretischer Volumestromverbrauch der betreffenden Anlage]
charakterisiert.

Mit dem Überschreiten der Konstanten $K_{min}$ und $K_{max}$ wird über eine Steuer- und Regeleinheit durch Zu- bzw. Abschaltung von Vakuumerzeugern die Stabilität des Systemvakuums gesichert.

Verfahrensgemäß wird mit der Verringerung des Arbeitsbereiches des Regelventils dessen Regelgenauigkeit und -dynamik verbessert.

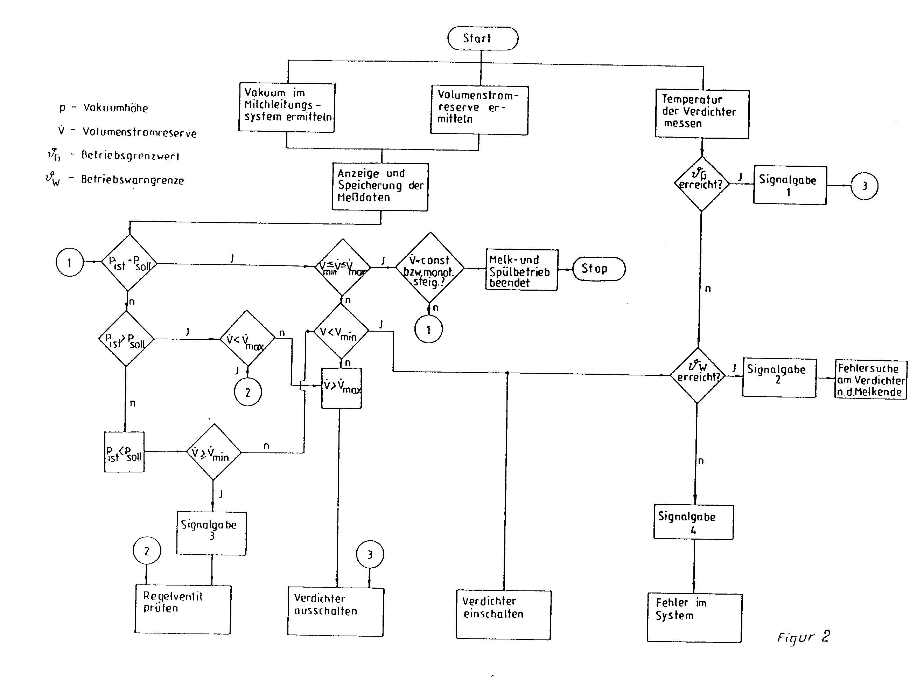

Erfindungsgemäß wird die Temperatur als ein weiterer Diagnoseparameter für die Funktionssicherheit des Systems einbezogen. Die permanente Verarbeitung des Temperatursignals aus einem Sensor, der an jedem Vakuumerzeuger in günstiger Anordnung vorgesehen wird, wird ständig entsprechend dem Diagnosealgorithmus nach Figur 2 mit einer Betriebswarngrenze ($\delta_W$) sowie einem Betriebsgrenzwert ($\delta_G$) der Vakuumerzeuger verglichen. Die Information zum Erreichen und Überschreiten der Betriebswarngrenze wird durch einen akustischen Signalgeber angezeigt. Die Erreichung und Überschreitung des Betriebsgrenzwertes ($\delta_G$) ist mit einer Notabschaltung des betreffenden Vakuumerzeugers gekoppelt. Eine Vakuumerzeugersteuerung kompensiert selbsttätig in Folge der Notabschaltung den Kapazitätsausfall durch Zuschaltung eines in Redundanz befindlichen einsatzbereiten Vakuumerzeugers.

Die Vorrichtung zur Durchführung des Verfahrens ist eine Anordnung, die aus Volumenstromsensor und aus ein oder mehreren Druck- bzw. Temperatursensoren sowie einer ortsgebundenen bzw. sationären Datenverarbeitungseinheit besteht. Zur Volumenstrombestimmung wird direkt an dem die freie Luft ansaugenden Abgang des Regelventils ein Volumenstromsensor angeordnet.

Die Druckentnahme wird im Milchleitungssystem in optimalem Abstand zu den Melkbecherinnenräumen angeordnet. Zur Optimierung werden 1 ... n Drucksensoren in einem Gesamtsystem angeordnet. Als Regelgröße wird das arithmetische Mittel aller Meßstellen aufbereitet und verarbeitet. Vorzugsweise erfolgt die Druckentnahme in Milchsammelräumen > 400 cm³. Je nach Art des Regelventils erfolgt die Übertragung der Meßgröße Druck elektrisch oder pneumatisch. Dabei findet bei Übertragungswegen > 4000 mm vorzugsweise die elektrische Form Anwendung.

Die Anordnung der Temperaturmeßstelle ist am bzw. im Vakuumerzeuger im Abstand von maximal 150 mm zur Außenkante des Vakuumerzeugers an der abluftseitigen Rohrleitung vorgesehen.

Die Vorrichtung umfaßt eine Datenverarbeitungsanlage, die mit der Meßanordnung an dem Regelventil (Volumenstrom), in dem Milchleitungssystem (Druck) und den Vakuumerzeugern (Temperatur) und zugehörigem Meßwertanpaßmodul ständig verbunden ist, den Meßwertaufbereitungsmodul und den Rechner mit dem speziellen Diagnosealgorithmus aufnimmt sowie mit einem Bedienmodul und Ausgabemodul für Anzeige, Alarmierung, Steuerung, Regelung und Datenübernahme gekoppelt ist. Eine solche Vorrichtung als permanente Funktionsdiagnose- und Regeleinrichtung ermöglicht die komplexe und schnelle Erfassung und Auswertung der wesentlichen Funktionsparameter von Melkanlagen unter Betriebsbedingungen sowie die Regelung deren stabilen Systemvakuums in Abhängigkeit von der gemessenen Volumenstromreserve.

Anordnung und Gestaltung der Sensoren für Volumenstrom, Druck und Temperatur werden vorrichtungsseitig so ausgeführt, daß mobile Vorrichtungen für die Überprüfung von Melkanlagen zur Nutzung der permanent anliegenden Diagnosesignale angeschlossen werden.

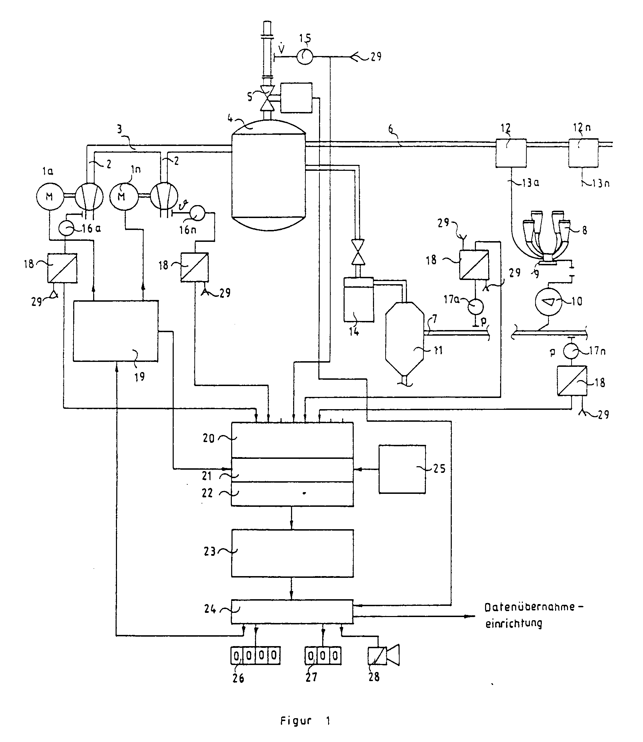

Zur Erläuterung des Verfahrens und der Vorrichtung dient die Figur 1. Die Erzeugung des Vakuums geschieht mittels der elektrisch angetriebenen Vakuumerzeuger 1 a bis 1 n.

Das Vakuum wird über das Verteilerrohr 3, den Druckausgleichs-behälter 4, die Vakuumleitung 6 und die Milchleitung 7 den Vakuumverbrauchern der Melkanlage zugeführt.

Die Messung des Vakuums erfolgt im Milchleitungssystem, an dessen instabilster Stelle, wahlweise in den Systemteilen 7, 9, 10 oder 11. Im Ausführungsbeispiel wird die Vakuummessung an einer großvolumigen Milchleitung 7 dargestellt.

Die gewonnenen Drucksignale werden über einen Meßwertanpassungsmodul 18 verstärkt und dem Meßwertaufbereitungsmodul 20 der Rechen- und Auswertereinheit 20, 21, 22, 23, 24 zugeführt.

Durch die Anordnung mehrerer Drucksensoren 17 a bis 17 n in Vakuumverbrauchernähe kann von der Datenverarbeitungseinheit 20, 21, 22, 23, 24 unter Berücksichtigung der Grenzwerte für die einzelnen Druckmeßstellen, eine von den Systemteilen 7, 9, 10 oder 11 unabhängiger Mittelwert des Vakuums gebildet und dem Regelprogramm des Rechners als Ist-Wert vorgegeben werden. In Abhängigkeit des Regelalgorithmus gemäß Figur 2 erfolgt durch die Ausgabebaugruppe 24 die Ansteuerung des Regelventils 5 und somit die Stabilisierung des Systemvakuums.

Da der Vakuumverbrauch in Melkanlagen, bedingt durch die Verbraucher, starken Schwankungen unterliegt, entsteht ein Bedarf für Reserveluft, welche über das Regelventil 5 in die Melkanlage einströmt und über den Volumenstromsensor 15 gemessen wird. Gleichzeitig erfolgt die Messung der Temperaturen der Vakuumerzeuger 1 a bis 1 n durch die Temperatursensoren 16 a bis 16 n, die an geeigneter Stelle für die thermische Zustandsbestimmung an den Vakuumerzeugern 1 a bis 1 n bzw. an deren Krümmer angebracht sind. Diese Meßsignale werden über Meßwertanpassungsmodule 18 dem Meßwertaufbereitungsmodul 20 zugeführt.

Weiterhin werden die Schaltzustandssignale der Vakuumerzeuger 1 a bis 1 n von deren Steuerung 19 auf die Eingabebaugruppen 21 der Datenverarbeitungseinheit 20, 21, 22, 23, 24 gegeben und über die Ausgabebaugruppe 24 erfolgt die Ansteuerung der Vakuumerzeugersteuerung 19.

Verfahrensgemäß erfolgt nach dem Diagnosealgorithmus entsprechend Figur 2 im Rechner 23 die Auswertung, Bewertung und Verknüpfung der Meßwerte, die Ausgabe der Funktionsparameter und die Steuerung der Vakuumerzeuger 1 a bis 1 n in Abhängigkeit dieser Parameter.

Zur Information des Betreibers wird eine Anzeige der wichtigsten Meßwerte über die Anzeige 26, eine An-

EP 0 442 383 B1

zeige von ermittelten Diagnosefehlern bzw. -hinweisen über die Anzeige 27 und eine akustische Warnung beim Erreichen kritischer Betriebsgrenzwerte über den akustischen Signalgeber 28 ausgegeben.

Mit Hilfe des Bedienmoduls 25 ist die Eingabe von Soll- und Grenzwerten zur Abarbeitung des Diagnosealgorithmus entsprechend Figur 2 und der Sollparameter des Systemvakuumregelkreises über das Regelventil 5 möglich.

Durch die Ausgabegruppe 24 wird weiterhin eine Schnittstelle für die Datenausgabe realisiert, so daß über entsprechende Datenübernahmeeinrichtungen, wie Drucker, Datenspeicher oder in der Anlage zentral eingesetzte Rechner eine Datendokumentation bzw. Weiterverarbeitung möglich ist. Hierbei unterstützt der Rechner 23 den Datenaustausch.

Die Anlage arbeitet permanent, ist fest installiert und kann, bedingt durch die Meßwertübertragung mittels Meßleitung, dezentralisiert und den räumlichen Gegebenheiten entsprechend eingebaut werden. Dadurch kann den klimatischen und den Schutz- und Bedienanforderungen besonders der Baugruppe der Auswertungseinheit 20, 21, 22, 23, 24, 25 besser entsprochen werden.

Die Sensoren 15 a bis 15 n, 16 a bis 16 n und 17 a bis 17 n bzw. deren Meßwertanpaßmodule 18 sind so gestaltet, daß die Meßsignale für mobile, externe Diagnoseeinrichtungen ausgekoppelt werden können.

Durch die Erfindung werden Eutererkrankungen im Kuhbestand in Folge instabiler Vakuumverhältnisse in Melkanlagen verhindert, so wie die energetischen Aufwendungen zum Betreiben des Maschinensystems minimiert. Die quantitative und qualitative Ausbeute der melkbaren und ermolkenen Rohmilch wird spürbar erhöht sowie notwendige veterinär-medizinische Behandlungen und Notschlachtungen in Folge Mastitiserkrankungen minimiert. Gesenkt werden außerdem die Betriebskosten für Melkanlagen.

## Patentansprüche

1. Verfahren zur permanenten Funktionsdiagnose einschließlich der Regelung des Systemvakuums von Melkanlagen, dadurch gekennzeichnet, daß

die für die Funktionsdiagnose wesentlichen Parameter direkt aus dem Druck-, Volumenstrom- und Temperatursignal gewonnen werden,

wobei der Druck ständig an einer oder mehreren Stellen des Milchleitungssystems, die durch Vakuuminstabilität gekennzeichnet sind, zur Bestimmung des Funktionszustandes und der Regelung des Gesamtsystems gemessen wird,

der Volumenstrom der einströmenden Reserveluft eines Regelventils zur stabilen Erhaltung des Systemvakuums,

sowie die Temperatur an zustandscharakterisierenden Stellen der Vakuumerzeuger zu deren Betriebsüberwachung, gemessen wird,

die gewonnen Meßsignale für die Druck-, Volumenstrom- und Temperaturauswertung innerhalb des Diagnosealgorithmus verknüpft werden,

sowohl als Diagnoseparameter aufbereitet innerhalb der vorgegebenen anlagenspezifischen Grenzwerte bewertet, als auch für die Regelung des Systemvakuums mit Hilfe der Meßgröße Druck über das Regelventil verwendet werden,

und die Volumenstromerzeugung des Gesamtsystems außerhalb des Arbeitsbereiches des Regel-ventils

$$K_{min} < B < K_{max}$$

$[K_{max}$ - anlagenspezifische Maximalkonstante]
$[K_{min}$ - anlagenspezifische Minimalkonstante]
$[B$ - Arbeitsbereich des Regelventils]
und unter Berücksichtigung des thermischen Arbeitsbereichs der Vakuumerzeuger durch deren Zu- und Abschalten diskontinuierlich geregelt wird.

2. Verfahren nach Anspruch 1., dadurch gekennzeichnet, daß

ein permanent arbeitendes Diagnosesystem für Melkanlagen mit einem oder mehreren Regelkreisen zu dessen Systemstabilisierung direkt gekoppelt wird.

3. Verfahren nach Anspruch 1. und 2., dadurch gekennzeichnet, daß

das Systemvakuum einer Melkanlage durch mehrere permanent erfaßte Funktionsparameter geregelt wird.

4. Vorrichtung zur Durchführung des Verfahrens gemäß Anspruch 1. bis 3., dadurch gekennzeichnet, daß

4

diese aus Volumenstromsensor, einem oder mehreren Drucksensoren, einem oder mehreren Temperatursensoren und einem Regelventil

sowie aus einer stationären Datenverarbeitungsanlage zur Verknüpfung der gewonnenen Meßsignale und zur Ansteuerung des Regelventils und der Vakuumerzenger besteht,

wobei die Drucksensoren als eingebaute Aufnehmer nahe den Euterzitzen an einer durch Vakuuminstabilität charakterisierten Stelle angeordnet sind.

5. Vorrichtung nach Anspruch 4., dadurch gekennzeichnet, daß

die Temperatursensoren an bzw. in den Vakuumerzeugern oder im maximalen Abstand von 150 mm bis zur Außenkante des Vakuumerzeugers an der abluftseitigen Rohrleitung angeordnet sind.

6. Vorrichtung nach Anspruch 4. und 5., dadurch gekennzeichnet, daß

der Volumenstromsensor an der Eingangsseite des Regelventils angeordnet ist.

7. Vorrichtung nach Ansprüchen 4., 5. und 6., dadurch gekennzeichnet, daß

die Übertragung des Drucksignals zum Regelventil bei elektrisch erfolgt.

8. Vorrichtung nach Ansprüchen 4., 5. und 6., dadurch gekennzeichnet, daß

die permanent erfaßten Meßgrößen in einer Daten-verarbeitungsanlage aufbereitet und für die Signalisierung und Alarmierung sowie Regelunszwecke verarbeitet werden.

9. Vorrichtung nach Ansprüchen 4., 5., 6. und 8., dadurch gekennzeichnet, daß

zur Revision der Melkanlage externe, mobile Prüfgeräte an die stationäre Sensortechnik angeschlossen werden können.

10. Vorrichtung nach Ansprüchen 4., 5., 6. und 8., dadurch gekennzeichnet, daß

die Stabilität des Systemvakuums über eine kombinierte Druck- und Volumenstromregelung realisiert wird.

11. Vorrichtung nach Anspruch 10, dadurch gekennzeichnet, daß

die Volumstromregulierung als Grobregelung durch das Zu- und Abschalten von Vakuumerzeugern und die Feinregulierung des Systemvakuums durch ein Regelventil erfolgen.

12. Vorrichtung nach Ansprüchen 4., 5., 6. und 8., dadurch gekennzeichnet, daß

alle nach dem Diagnosealgorithmus ermittelten Daten gespeichert und ausgegeben werden können.

**Claims**

1. Method for the permanent operations diagnosis of a milking machine, including the control of the system vacuum, characterized in that

the essential parameters for the operations diagnosis are obtained directly from the signals for pressure, volume flow and temperature,

with the pressure being measured constantly at one or more places of the milk leading system that are characterized by vacuum instability for the determination of the function state and the control of the total system,

the volume flow of flowing-in reserve air of a control valve for stable maintenance of the system vacuum,

as well as the temperature at state characterizing places of the vacuum generator for the purpose of supervision of their operation, is measured,

the obtained measuring signals for the evaluation of pressure, volume flow and temperature are connected within the diagnosis algorithm,

evaluated prepared as diagnosis parameter within the given limiting value specific to the installation, as well as used for the control of the system vacuum with the help of the measured variable pressure over the control valve,

and the production of volume flow by the total system outside the operating range of the control valve

$$K_{min} < B < K_{max}$$

$K_{max}$ - maximum constant specific to the installation
$K_{min}$ - minimum constant specific to the installation
B - operating range of control valve
and under consideration of the thermic operating range of the vacuum generator by the connecting and disconnecting of which is controlled discontinously.

2. Method according to Claim 1, characterized in that
a permanently operating diagnosis system for a milking machine is connected directly to one or more control circuits for its stabilization.

3. Method according to Claim 1. and 2., characterized in that
the system vacuum of a milking machine is controlled by several permanently registered function parameters.

4. Device for implementation of the method according to Claims 1. to 3., characterized in that
they consist of a volume flow sensor, one or more pressure sensors, one or more temperature sensors and a control valve,
as well as of a stationary data processing installation for connecting the obtained measure signals and for heading for the control valve and the vacuum generator,
with the pressure sensors being arranged as incorporated receiver near the udder teats at a place characterized by vacuum instability.

5. Device according to Claim 4., characterized by that
the temperature sensors are arranged at or in the vacuum generators or with a maximum distance of 150 mm to the external border of the tubing at the exhaust air side.

6. Device according to Claims 4. and 5., characterized by that
the volume flow sensor is arranged at the inlet side of the control valve.

7. Device according to Claims 4., 5. and 6., characterized by that
the pressure signal is transmitted electrically to the control valve.

8. Device according to Claims 4., 5. and 6., characterized by that
the permanently registered measured variables are processed in a data processing installation and prepared for signaling and alarming as well as for control purposes.

9. Device according to Claims 4., 5., 6. and 8., characterized in that
external mobile testing instruments can be connected to the stationary sensor technique for revision of the milking machine.

10. Device according to Claims 4., 5., 6. and 8., characterized in that
stability of the system vacuum is realized by a combined control of pressure and volume flow.

11. Device according to Claim 10, characterized in that
adjustment of the volume flow can be effected as rough adjustment by connecting and disconnecting vacuum generators and the fine adjustment of the system vacuum by a control valve.

12. Device according to Claims 4., 5., 6. and 8., characterized in that
all data determined according to the diagnosis algorithm can be stored and issued.

## Revendications

1. Procédé pour le diagnostic permanent du fonctionnement, y compris le réglage du vide, dans le système de trayeuses, caractérisé en ce que :
on obtient directement les paramètres qui sont importants pour le diagnostic du fonctionnement directement à partir du signal de pression, du signal du débit volumique et du signal de température,
la pression étant mesurée en permanence en un ou plusieurs emplacements du système de conduites véhiculant le lait, qui sont caractérisés par un instabilité au vide, pour la détermination de l'état de fonctionnement et de la régulation de l'ensemble du système,
on mesure le débit volumique de l'ai de réserve arrivant d'un valve de régulation pour le maintien stable du vide dans le système, ainsi que la température en des points caractérisant l'état des générateurs de vide, pour surveiller leur fonctionnement,
les signaux de mesure obtenus pour l'évaluation de la pression, du débit volumique et de la température sont combinés à l'intérieur de l'algorithme de diagnostic, et sont évalués, à l'état préparé en tant que paramètres de diagnostic, à l'intérieur des valeurs limites prédéterminées spécifiques aux trayeuses, et sont utilisés également pour la régulation du vide du système à l'aide de la grandeur de mesure constituée par la pression, par l'intermédiaire de la valve de régulation, et
la production du débit volumique de l'ensemble du système à l'extérieur de la gamme de travail de la valve de régulation

$$Kmin<B<Kmax$$

[$K_{max}$ = constant maximale spécifique aux trayeuses]
[$K_{min}$ = constant minimale spécifique aux trayeuses]
[B = gamme de travail de la valve de régulation]
est réglée de façon discontinue et compte tenu de la gamme thermique de travail des générateurs de vide, pour leur mise en service et hors service.

2. Procédé selon la revendication 1, caractérisé en ce qu'un système de diagnostic travaillant de façon permanente pour des trayeuses et couplé directement à un ou plusieurs circuits de régulation servant à stabiliser ce système.

3. Procédé selon les revendication 1 et 2, caractérisé en ce que le vide dans le système d'une trayeuse est réglé au moyen de plusieurs paramètres de fonctionnement détectés de façon permanente.

4. Dispositif pour la mise en oeuvre du procédé selon les revendications 1 à 3, caractérisé en ce que ce dispositif est constitué par un capteur de débit volumique, un ou plusieurs capteurs de pression, un ou plusieurs capteurs de température et une valve de régulation, ainsi que
par une installation fixe de traitement des données servant à combiner les signaux de mesure obtenus et à commander la valve de régulation et les générateurs de vide,
les capteurs de pression étant disposés en tant que récepteurs à intégrer à proximité des bouts des mamelles, en un emplacement caractérisé par une instabilité au vide.

5. Dispositif selon la revendication 4, caractérisé en ce que les capteurs de température sont disposés sur ou dans des générateurs de vide ou à la distance maximale de 150 mm par rapport au bord extérieur du générateur de vide, dans la conduite tubulaire située sur le côté d'évacuation de l'air.

6. Dispositif selon les revendications 4 et 5, caractérisé en ce que le capteur de débit volumique est disposé sur le côté entrée de la valve de régulation.

7. Dispositif selon les revendications 4,5 et 6, caractérisé en ce que la transmission du signal de pression à la valve de régulation s'effectue électriquement.

8. Dispositif selon les revendications 4,5 et 6, caractérisé en ce que les grandeurs de mesure détectées en permanence sont préparées dans une installation de traitement des données et sont traitées pour la signalisation et la délivrance d'une alarme ainsi qu'à des fins de régulation.

9. Dispositif selon les revendications 4,5,6 et 8, caractérisé en ce que pour la révision de la trayeuse, on peut raccorder des appareils mobiles extérieurs de contrôle au système fixe de capteurs.

10. Dispositif selon les revendications 4,5,6 et 8, caractérisé en ce que la stabilité du vide du système est obtenue au moyen d'une régulation combinée de la pression et du débit volumique.

11. Dispositif selon la revendication 10, caractérisé en ce que la régulation du débit volumique est exécutée sous la forme d'une régulation approximative au moyen du branchement et du débranchement de générateurs de vide et la régulation précise du vide du système est réalisée au moyen d'une valve de régulation.

12. Dispositif selon les revendications 4,5,6 et 8, caractérisé en ce que toutes les données déterminées selon l'algorithme de diagnostic peuvent être mémorisées et délivrées.

Figur 1

EP 0 442 383 B1

9

p — Vakuumhöhe

$\dot{V}$ — Volumenstromreserve

$\vartheta_G$ — Betriebsgrenzwert

$\vartheta_W$ — Betriebswarngrenze

Figur 2